# EUROPEAN PATENT APPLICATION

(11) **EP 4 202 716 A1**
(43) Date of publication of application: **28.06.2023**
(21) Application number: 21860889.1
(22) Date of filing: 26.05.2021
(51) Int. Cl.: G06F 16/174

(54) **INFORMATION PROCESSING DEVICE, INFORMATION PROCESSING METHOD, AND INFORMATION PROCESSING PROGRAM**

(30) Priority: 24.08.2020 JP 2020141268
(71) Applicant: FUJIFILM Corporation, Tokyo 106-8620 (JP)
(72) Inventor: OISHI, Yutaka, Tokyo 106-8620 (JP); KONDO, Michitaka, Tokyo 106-8620 (JP); UNO, Yuko, Tokyo 106-8620 (JP)
(74) Representative: Klunker IP Patentanwälte PartG mbB
(86) International application number: PCT/JP2021/020010
(87) International publication number: WO 2022/044458

(57) **Abstract**

An information processing apparatus receives a first object list corresponding to a first prefix from each of a plurality of storage nodes, compares, for an object that has a delimiter at the end among objects included in each of the first object lists, a portion obtained by excluding the delimiter at the end with a second prefix included in the first object list received from the other storage node, and removes redundancy in a case where the portion obtained by excluding the delimiter at the end and the second prefix are redundant with each other and then transmits a second object list obtained by merging each of the first object lists to a user terminal.

## Description

### Technical Field

The present disclosure relates to an information processing apparatus, an information processing method, and an information processing program.

### Background Art

A technique of detecting redundant partial data from a plurality of pieces of partial data included in a data file acquired from a storage node in which the data file is stored is disclosed (refer to JP2017-142664A).

### SUMMARY OF THE INVENTION

### Technical Problem

By the way, an object storage system is a key-value type storage system. On the other hand, in the object storage systems, there is a system in which a user can create a directory on a management screen to manage an object. That is, such a system does not have a hierarchical structure on a storage, but appears to have a hierarchical structure on a management screen referenced by a user.

In addition, in such a system, for example, identification information that is called an object key and is for uniquely identifying an object includes a prefix representing the hierarchical structure and an object name. Further, such a system has a function of responding, in a case where a prefix such as "/" or "/foo/" which represents a hierarchy of an object list to be acquired is designated, an object list including objects in layers lower than the prefix.

The object list includes not only an object but also a prefix of the object, and the object and the prefix can be distinguished from each other. However, in the object storage systems, there is a system that handles, as an object, a directory which is created by a user on a management screen and is an empty directory in which an object is not stored. In such a system, in a case of acquiring an object list, redundancy of the prefixes cannot be removed in some cases.

The technique described in JP2017-142664A is a technique for removing redundancy in an acquired data file, and is not a technique for removing redundancy of prefixes including an object as an empty directory.

The present disclosure has been made in view of the above circumstances, and an object of the present disclosure is to provide an information processing apparatus, an information processing method, and an information processing program capable of removing redundancy of prefixes including an object as an empty directory.

### Solution to Problem

According to the present disclosure, there is provided an information processing apparatus comprising: at least one processor, in which the processor is configured to execute object list acquisition processing including receiving an acquisition request of an object list that is transmitted from a user terminal, transmitting, to each of a plurality of storage nodes, an acquisition request of a first object list corresponding to a first prefix according to the acquisition request, receiving the first object list corresponding to the acquisition request of the first object list from each of the plurality of storage nodes, comparing, for an object that has a delimiter at an end among objects included in the first object lists received from each of the plurality of storage nodes, a portion obtained by excluding the delimiter at the end with a second prefix included in the first object list received from the other storage node, and removing redundancy in a case where the portion obtained by excluding the delimiter at the end and the second prefix are redundant with each other and then transmit a second object list obtained by merging the first object lists received from each of the plurality of storage nodes to the user terminal.

In the information processing apparatus according to the present disclosure, the storage node may be a storage node that constitutes an object storage system, the first prefix may be a portion of an object key that represents a hierarchy of an object list to be acquired, and the second prefix may be a portion of the object key that is obtained by excluding at least an object name and the first prefix.

Further, in the information processing apparatus according to the present disclosure, the processor may be configured to set, in a case where the acquisition request of the object list that is transmitted from the user terminal does not include the first prefix, all the objects held by the plurality of storage nodes as objects to be processed and execute the object list acquisition processing.

Further, according to the present disclosure, there is provided an information processing method executed by a processor of an information processing apparatus, the method comprising: object list acquisition processing including receiving an acquisition request of an object list that is transmitted from a user terminal, transmitting, to each of a plurality of storage nodes, an acquisition request of a first object list corresponding to a first prefix according to the acquisition request, receiving the first object list corresponding to the acquisition request of the first object list from each of the plurality of storage nodes, comparing, for an object that has a delimiter at an end among objects included in the first object lists received from each of the plurality of storage nodes, a portion obtained by excluding the delimiter at the end with a second prefix included in the first object list received from the other storage node, and removing redundancy in a case where the portion obtained by excluding the delimiter at the end and the second prefix are redundant with each other and then transmitting a second object list obtained by merging the first object lists received from each of the plurality of storage nodes to the user terminal.

Further, according to the present disclosure, there is provided an information processing program for causing a processor of an information processing apparatus to execute object list acquisition processing comprising: receiving an acquisition request of an object list that is transmitted from a user terminal; transmitting, to each of a plurality of storage nodes, an acquisition request of a first object list corresponding to a first prefix according to the acquisition request; receiving the first object list corresponding to the acquisition request of the first object list from each of the plurality of storage nodes; comparing, for an object that has a delimiter at an end among objects included in the first object lists received from each of the plurality of storage nodes, a portion obtained by excluding the delimiter at the end with a second prefix included in the first object list received from the other storage node; and removing redundancy in a case where the portion obtained by excluding the delimiter at the end and the second prefix are redundant with each other and then transmitting a second object list obtained by merging the first object lists received from each of the plurality of storage nodes to the user terminal.

### Advantageous Effects of Invention

According to the present disclosure, it is possible to remove the redundancy of prefixes including an object as an empty directory.

### BRIEF DESCRIPTION OF THE DRAWINGS

Fig. 1 is a block diagram illustrating an example of a configuration of a recording and reproducing system.
Fig. 2 is a diagram for explaining an object.
Fig. 3 is a block diagram illustrating an example of a hardware configuration of an information processing apparatus.
Fig. 4 is a diagram illustrating an example of a management screen.
Fig. 5 is a diagram for explaining an object list in a case where one storage node is provided.
Fig. 6 is a diagram for explaining an object list in a case where a plurality of storage nodes are provided.
Fig. 7 is a block diagram illustrating an example of a functional configuration of the information processing apparatus.
Fig. 8 is a diagram for explaining details of object list acquisition processing.
Fig. 9 is a flowchart illustrating an example of object list acquisition processing.

### DESCRIPTION OF EMBODIMENTS

Hereinafter, an example of an embodiment for performing a technique according to the present disclosure will be described in detail with reference to the drawings.

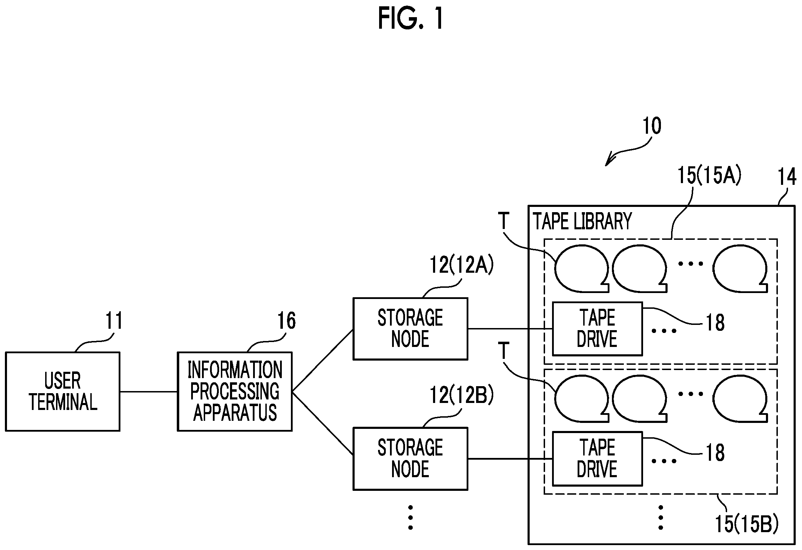

First, a configuration of a recording and reproducing system 10 according to the present embodiment will be described with reference to Fig. 1. As illustrated in Fig. 1, the recording and reproducing system 10 includes a plurality of storage nodes 12, a tape library 14, and an information processing apparatus 16. Each storage node 12 and the information processing apparatus 16 are communicably connected to each other via a network. In the following, in a case of distinguishing each storage node 12, an alphabet is added to an end of the reference numeral, such as the storage node 12A and the storage node 12B. Examples of the storage node 12 and the information processing apparatus 16 include a server computer and the like. In addition, the information processing apparatus 16 is communicably connected to a user terminal 11 via a network. Examples of the user terminal 11 include a personal computer and the like.

The tape library 14 includes a plurality of slots (not illustrated) and a plurality of tape drives 18, and a magnetic tape T as an example of a recording medium is loaded into each slot. Examples of the magnetic tape T include a linear tape-open (LTO) tape.

In a case where the storage node 12 writes or reads data to or from the magnetic tape T, the magnetic tape T as a write target or a read target is loaded from the slot into a predetermined tape drive 18. In a case where data is written or read to and from the magnetic tape T loaded into the tape drive 18, the magnetic tape T is unloaded from the tape drive 18 into the slot in which the magnetic tape T is originally loaded.

Further, the tape library 14 is divided into logical libraries 15 that are a plurality of logical tape libraries. In the following, in a case of distinguishing each logical library 15, an alphabet is added to an end of the reference numeral, such as the logical library 15A and the logical library 15B.

Each logical library 15 includes a plurality of slots and a plurality of tape drives 18. In the present embodiment, a case where the number of slots and the number of tape drives 18 included in each logical library 15 are the same will be described. On the other hand, the number of slots and the number of tape drives 18 included in each logical library 15 may be different from each other. Further, in the present embodiment, a case where the number of the storage nodes 12 and the number of the logical libraries 15 are the same will be described. On the other hand, the number of the storage nodes 12 and the number of the logical libraries 15 may be different from each other.

The storage node 12 and the logical library 15 have a one-to-one correspondence, and each storage node 12 is connected to the tape drive 18 of each of the logical libraries 15 different from each other. Therefore, for example, the storage node 12A can write or read data to or from the magnetic tape T loaded in the slot of the logical library 15A by controlling the tape drive 18 of the logical library 15A to which the storage node 12A is connected. On the other hand, for example, the storage node 12A cannot control the logical library 15B to which the storage node 12A is not connected. Thus, the storage node 12A cannot write or read data to or from the magnetic tape T loaded in the slot of the logical library 15B.

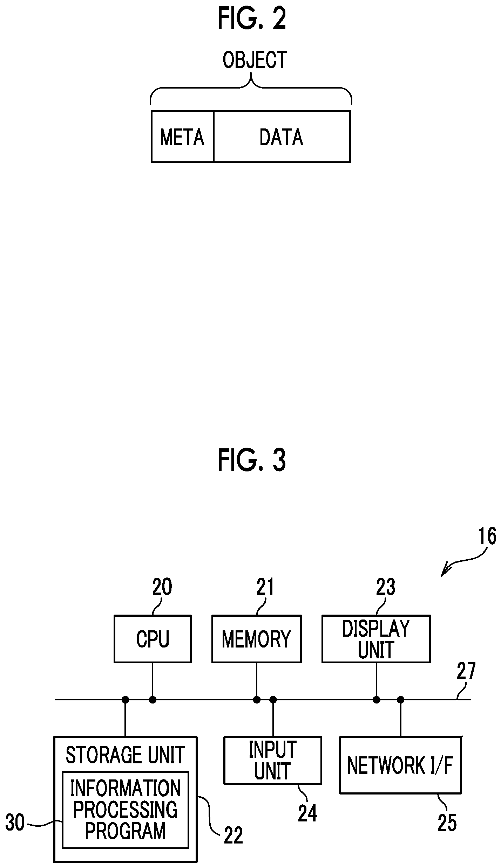

In the present embodiment, as an example, as illustrated in Fig. 2, as a unit for handling data to be recorded in the magnetic tape T, an example of an embodiment in which an object including data to be saved by a user such as document data and image data and metadata related to the data is applied will be described. In the example of Fig. 2, the metadata is referred to as "meta". A storage system that handles the object is called an object storage system. That is, the storage node 12 is a storage node that is included in an object storage system. The metadata includes, for example, identification information of an object such as an object key, and attribute information such as an object name, a data size, and a time stamp. The recording order of the data and the metadata when recording the object in the magnetic tape T is not particularly limited, and may be an order of the metadata and the data or an order of the data and the metadata.

Next, a hardware configuration of the information processing apparatus 16 according to the present embodiment will be described with reference to Fig. 3. As illustrated in Fig. 3, the information processing apparatus 16 includes a central processing unit (CPU) 20, a memory 21 as a temporary memory area, and a non-volatile storage unit 22. Further, the information processing apparatus 16 includes a display unit 23 such as a liquid crystal display, an input unit 24 such as a keyboard and a mouse, and a network interface (I/F) 25 connected to a network. The CPU 20, the memory 21, the storage unit 22, the display unit 23, the input unit 24, and the network I/F 25 are connected to a bus 27.

The storage unit 22 is realized by a hard disk drive (HDD), a solid state drive (SSD), a flash memory, or the like. An information processing program 30 is stored in the storage unit 22 as a storage medium. The CPU 20 reads the information processing program 30 from the storage unit 22, develops the read information processing program 30 in the memory 21, and executes the developed information processing program 30.

The user terminal 11 performs various requests such as saving of the object in the recording and reproducing system 10, acquisition of the object from the recording and reproducing system 10, and acquisition of the object list from the recording and reproducing system 10, by using various application programming interfaces (APIs) provided by the recording and reproducing system 10.

As described above, the recording and reproducing system 10 according to the present embodiment is an object storage system. That is, the recording and reproducing system 10 according to the present embodiment is a key-value type storage system. Therefore, the recording and reproducing system 10 does not have a hierarchical structure such as a directory on the storage node 12, and the object is identified by an object key as an example of identification information of the object.

Here, in the recording and reproducing system 10 according to the present embodiment, the user can create a directory on a management screen displayed on the user terminal 11. That is, the recording and reproducing system 10 does not have a hierarchical structure on the storage node 12, but appears to have a hierarchical structure on the management screen referenced by the user. The management screen may also be referred to as a management console.

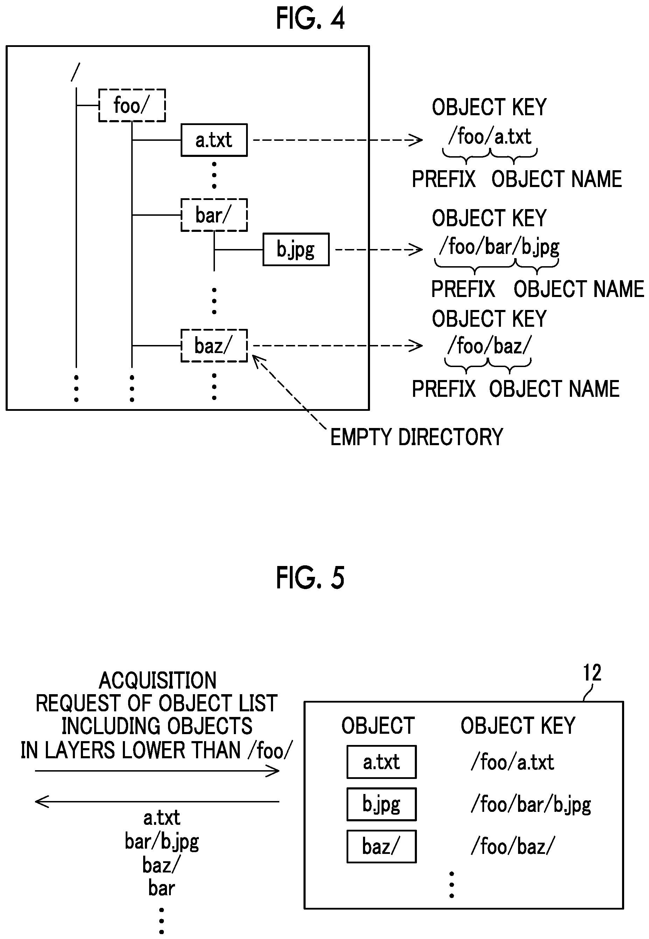

Fig. 4 is a diagram illustrating an example of a management screen. In Fig. 4, a broken-line rectangle represents a directory created on the management screen by the user, and a solid-line rectangle represents an object saved in the directory by the user. The user operates the user terminal 11, and performs an operation of designating a directory on the management screen and saving an object in the directory. An object key for uniquely identifying the object in the system is given to the object. In the present embodiment, in the object key, a portion representing a hierarchical structure (for example, a full path of a directory in which an object is saved on a management screen) and an object name are connected. In each directory, an object having the same name cannot be saved. Thus, the object key is a unique key for each object. A part or the whole of the portion representing the hierarchical structure is referred to as a "prefix". In addition, each directory name of the portion representing the hierarchical structure and the object name are separated by a separator (also referred to as a delimiter). In the present embodiment, an example in which "/" is used as a delimiter will be described.

Further, as illustrated in Fig. 4, in the recording and reproducing system 10 according to the present embodiment, the directory is not an object. On the other hand, an empty directory that is only created by the user and does not store an object is treated as an object. In addition, in the present embodiment, an object name of an empty directory is an object name obtained by adding a delimiter to an end of the directory name (in the example of Fig. 4, "baz/").

By the way, each storage node 12 has a function of providing a list of objects held by the own storage node (hereinafter, referred to as "object list"). The object held by each storage node 12 means an object recorded on the magnetic tape T loaded in the logical library 15 corresponding to the storage node 12.

The function of providing an object list of each storage node 12 will be described with reference to Fig. 5. As illustrated in Fig. 5, the storage node 12 receives an acquisition request of an object list. In a case where an acquisition request is received, a prefix (hereinafter, referred to as "first prefix") representing a hierarchy of an object list to be acquired is designated. In the example of Fig. 5, an example in which "/foo/" is designated as the first prefix is illustrated.

In response to the received acquisition request, the storage node 12 responds an object list including objects each of which has a head of the object key including the designated first prefix. The object list includes a portion other than the first prefix of the object key. The objects also include an empty directory, as described above. In addition, the object list includes not only the object but also a prefix, that is, a directory which is created on the management screen by the user and in which an object is stored.

As illustrated in Fig. 5 as an example, in a case where the storage node 12 holds an object of which the object key is "/foo/a.txt", an object of which the object key is "/foo/bar/b.jpg", and an empty directory of which the object key is "/foo/baz/", the object list includes "a.txt", "bar/b.jpg", and "baz/" corresponding to the objects and "bar" corresponding to a prefix. In the following, the prefix included in the object list is referred to as a "second prefix". It can be said that the object included in the object list is a portion obtained by excluding the first prefix from the object key and the second prefix is a portion obtained by excluding the object name, the first prefix, and the delimiter in the object key.

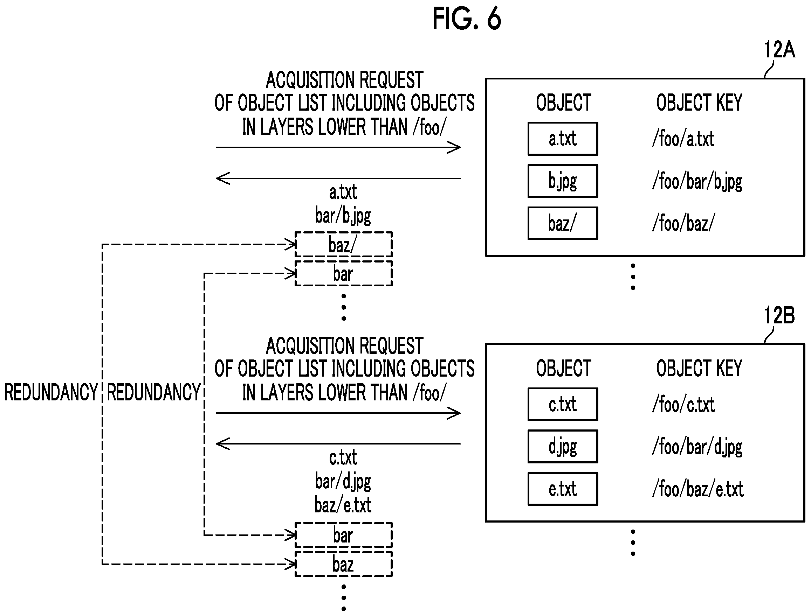

In a case where one storage node 12 is provided, the objects and the prefixes included in the object list do not include redundancy. On the other hand, as illustrated in Fig. 6 as an example, in a case where a plurality of storage nodes 12 are provided, the object key is unique in the system, and thus the object list does not include redundancy in objects other than an empty directory.

However, for the second prefix, the object list may include redundancy. In addition, the object as an empty directory may be redundant with the second prefix. The information processing apparatus 16 according to the present embodiment has a function of removing redundancy of the second prefix in the object list and redundancy between the empty directory and the second prefix.

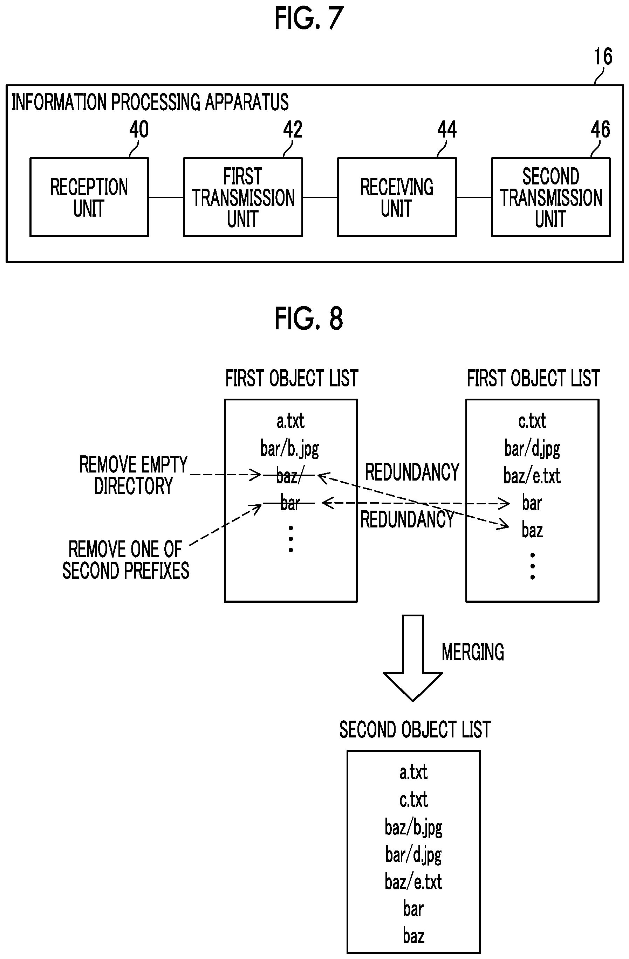

Next, a functional configuration of the information processing apparatus 16 according to the present embodiment will be described with reference to Fig. 7. As illustrated in Fig. 7, the information processing apparatus 16 includes a reception unit 40, a first transmission unit 42, a receiving unit 44, and a second transmission unit 46. In a case where the CPU 20 executes the information processing program 30, the information processing apparatus 16 functions as the reception unit 40, the first transmission unit 42, the receiving unit 44, and the second transmission unit 46.

The reception unit 40 receives an acquisition request of an object list that is transmitted from the user terminal 11. The acquisition request includes a first prefix designated by the user.

The first transmission unit 42 transmits, to each of the plurality of storage nodes 12, an acquisition request of a first object list corresponding to the first prefix included in the acquisition request received by the reception unit 40. As described above, the storage node 12 transmits an object list including objects each of which has a head of the object key including the designated first prefix, to the information processing apparatus 16.

The receiving unit 44 receives the first object list corresponding to the acquisition request of the first object list from each of the plurality of storage nodes 12.

The second transmission unit 46 compares, for an object that has a delimiter at the end among objects included in the first object lists received from each of the plurality of storage nodes 12, a portion which is obtained by excluding the delimiter at the end with the second prefix included in the first object list received from the other storage node. Specifically, the second transmission unit 46 compares, for an object that has a delimiter at the end among objects included in all two sets of the first object lists, a portion which is obtained by excluding the delimiter at the end with the second prefix included in the first object list received from the other storage node.

As a result of the comparison, in a case where the portion obtained by excluding the delimiter at the end and the second prefix are redundant with each other, the second transmission unit 46 removes redundancy. In the present embodiment, the second transmission unit 46 removes, from the first object list, an object as an empty directory that is redundant with the second prefix. The second transmission unit 46 may remove, from the first object list, the second prefix that is redundant with the object as an empty directory.

In addition, the second transmission unit 46 compares, for all two sets of the first object lists, the second prefixes with each other. As a result of the comparison, in a case where the second prefixes are redundant with each other, the second transmission unit 46 removes one of the redundant second prefixes from the first object list.

As illustrated in Fig. 8 as an example, the second transmission unit 46 removes redundancy as described above, and then generates a second object list by merging the first object lists received from each of the plurality of storage nodes 12. In addition, the second transmission unit 46 transmits the generated second object list to the user terminal 11.

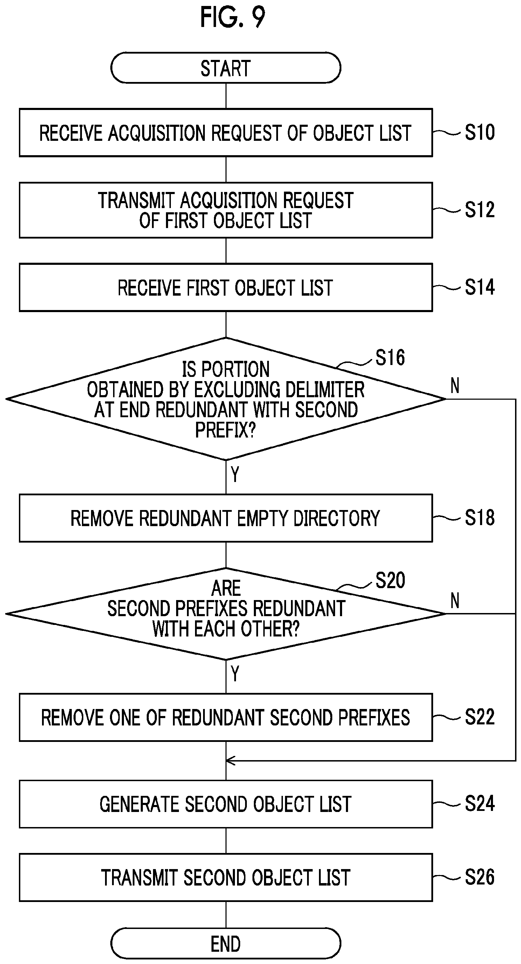

Next, an operation of the information processing apparatus 16 according to the present embodiment will be described with reference to Fig. 9. In a case where the CPU 20 executes the information processing program 30, object list acquisition processing illustrated in Fig. 9 is executed. The object list acquisition processing illustrated in Fig. 9 is executed, for example, in a case where the information processing apparatus 16 receives an acquisition request of an object list that is transmitted from the user terminal 11.

In step S10 of Fig. 9, the reception unit 40 receives an acquisition request of an object list that is transmitted from the user terminal 11. In step S12, the first transmission unit 42 transmits, to each of the plurality of storage nodes 12, an acquisition request of a first object list corresponding to the first prefix included in the acquisition request received in step S10.

In step S14, the receiving unit 44 receives, from each of the plurality of storage nodes 12, a first object list corresponding to the acquisition request of the first object list that is transmitted in step S12.

In step S16, as described above, the second transmission unit 46 compares, for an object that has a delimiter at the end among objects included in the first object lists received in step S14, a portion which is obtained by excluding the delimiter at the end with the second prefix included in the first object list received from the other storage node. In a case where the portion obtained by excluding the delimiter at the end is redundant with the second prefix, a determination result in step S16 is YES, and the process proceeds to step S18.

In step S18, as described above, the second transmission unit 46 removes, from the first object list, an object as an empty directory that is redundant with the second prefix. In step S20, the second transmission unit 46 compares, for all two sets of the first object lists received in step S14, the second prefixes with each other. In a case where the second prefixes are redundant with each other, a determination result in step S20 is YES, and the process proceeds to step S22. In step S22, the second transmission unit 46 removes one of the redundant second prefixes from the first object list. In a case where processing of step S22 is completed, the process proceeds to step S24.

On the other hand, in a case where a determination result in step S16 is NO, the process proceeds to step S24. In addition, even in a case where a determination result in step S20 is NO, the process proceeds to step S24. In step S24, the second transmission unit 46 generates a second object list by merging all the first object lists after the above processing is performed. In step S26, the second transmission unit 46 transmits the second object list generated in step S24 to the user terminal 11. In a case where processing of step S26 is completed, object list acquisition processing is completed.

As described above, according to the present embodiment, it is possible to remove redundancy of prefixes including an object as an empty directory.

In the embodiment, in a case where the acquisition request of an object list that is transmitted from the user terminal 11 does not include the first prefix, the information processing apparatus 16 may set all the objects held by the plurality of storage nodes 12 as the objects to be processed and execute object list acquisition processing. Specifically, in this case, for example, the information processing apparatus 16 executes object list acquisition processing illustrated in Fig. 9 by using "/" as the first prefix.

Further, in the embodiment, a case where the technique according to the present disclosure is applied to an object storage system has been described. On the other hand, the present disclosure is not limited thereto. The technique according to the present disclosure may be applied to a file storage system that handles data in file units.

Further, in the embodiment, for example, as a hardware structure of a processing unit that executes various processing, such as the reception unit 40, the first transmission unit 42, the receiving unit 44, and the second transmission unit 46, the following various processors may be used. The various processors include, as described above, a CPU, which is a general-purpose processor that functions as various processing units by executing software (program), and a dedicated electric circuit, which is a processor having a circuit configuration specifically designed to execute a specific processing, such as a programmable logic device (PLD) or an application specific integrated circuit (ASIC) that is a processor of which the circuit configuration may be changed after manufacturing such as a field programmable gate array (FPGA).

One processing unit may be configured by one of these various processors, or may be configured by a combination of two or more processors of the same type or different types (for example, a combination of a plurality of FPGAs or a combination of a CPU and an FPGA). Further, the plurality of processing units may be configured by one processor.

As an example in which the plurality of processing units are configured by one processor, firstly, as represented by a computer such as a client and a server, a form in which one processor is configured by a combination of one or more CPUs and software and the processor functions as the plurality of processing units may be adopted. Secondly, as represented by a system on chip (SoC) or the like, a form in which a processor that realizes the function of the entire system including the plurality of processing units by one integrated circuit (IC) chip is used may be adopted. As described above, the various processing units are configured by using one or more various processors as a hardware structure.

Further, as the hardware structure of the various processors, more specifically, an electric circuit (circuitry) in which circuit elements such as semiconductor elements are combined may be used.

Further, in the embodiment, an example in which the information processing program 30 is stored (installed) in the storage unit 22 in advance has been described. On the other hand, the present disclosure is not limited thereto. The information processing program 30 may be provided by being recorded in a recording medium such as a compact disc read only memory (CD-ROM), a digital versatile disc read only memory (DVD-ROM), or a Universal Serial Bus (USB) memory. Further, the information processing program 30 may be downloaded from an external apparatus via a network.

In the disclosure of Japanese Patent Application No. 2020-141268, filed August 24, 2020, the entire contents of which are incorporated herein by reference. Further, all documents, patent applications, and technical standards mentioned in this specification are incorporated herein by reference to the same extent as in a case where each document, each patent application, and each technical standard are specifically and individually described by being incorporated by reference.

## Claims

1. An information processing apparatus comprising:
at least one processor, wherein the processor is configured to execute object list acquisition processing including:
receiving an acquisition request of an object list that is transmitted from a user terminal;
transmitting, to each of a plurality of storage nodes, an acquisition request of a first object list corresponding to a first prefix according to the acquisition request;
receiving the first object list corresponding to the acquisition request of the first object list from each of the plurality of storage nodes;
comparing, for an object that has a delimiter at an end among objects included in the first object lists received from each of the plurality of storage nodes, a portion obtained by excluding the delimiter at the end with a second prefix included in the first object list received from the other storage node; and
removing redundancy in a case where the portion obtained by excluding the delimiter at the end and the second prefix are redundant with each other and then transmit a second object list obtained by merging the first object lists received from each of the plurality of storage nodes to the user terminal.

2. The information processing apparatus according to claim 1, wherein:
the storage node is a storage node that constitutes an object storage system,
the first prefix is a portion of an object key that represents a hierarchy of an object list to be acquired, and
the second prefix is a portion of the object key that is obtained by excluding at least an object name and the first prefix.

3. The information processing apparatus according to claim 1 or 2, wherein the processor is configured to set, in a case where the acquisition request of the object list that is transmitted from the user terminal does not include the first prefix, all the objects held by the plurality of storage nodes as objects to be processed and execute the object list acquisition processing.

4. An information processing method for causing a processor of an information processing apparatus to execute object list acquisition processing comprising:
receiving an acquisition request of an object list that is transmitted from a user terminal;
transmitting, to each of a plurality of storage nodes, an acquisition request of a first object list corresponding to a first prefix according to the acquisition request;
receiving the first object list corresponding to the acquisition request of the first object list from each of the plurality of storage nodes;
comparing, for an object that has a delimiter at an end among objects included in the first object lists received from each of the plurality of storage nodes, a portion obtained by excluding the delimiter at the end with a second prefix included in the first object list received from the other storage node; and
removing redundancy in a case where the portion obtained by excluding the delimiter at the end and the second prefix are redundant with each other and then transmitting a second object list obtained by merging the first object lists received from each of the plurality of storage nodes to the user terminal.

5. An information processing program for causing a processor of an information processing apparatus to execute object list acquisition processing comprising:
receiving an acquisition request of an object list that is transmitted from a user terminal;
transmitting, to each of a plurality of storage nodes, an acquisition request of a first object list corresponding to a first prefix according to the acquisition request;
receiving the first object list corresponding to the acquisition request of the first object list from each of the plurality of storage nodes;
comparing, for an object that has a delimiter at an end among objects included in the first object lists received from each of the plurality of storage nodes, a portion obtained by excluding the delimiter at the end with a second prefix included in the first object list received from the other storage node; and
removing redundancy in a case where the portion obtained by excluding the delimiter at the end and the second prefix are redundant with each other and then transmitting a second object list obtained by merging the first object lists received from each of the plurality of storage nodes to the user terminal.
